# EUROPÄISCHE PATENTSCHRIFT

(11) **EP 2 061 304 B1**
(45) Veröffentlichungstag und Bekanntmachung des Hinweises auf die Patenterteilung: **15.02.2012**
(21) Anmeldenummer: 07820124.1
(22) Anmeldetag: 11.09.2007
(51) Int. Cl.: A01J 5/04, A01J 5/08

(54) **ZITZENGUMMI SOWIE MELKBECHER MIT EINER BELÜFTUNGSDÜSE**
TEAT RUBBER AND MILKING CUP WITH A VENTILATION NOZZLE
TETINE EN CAOUTCHOUC ET RECIPIENT A LAIT DOTE D'UN AJUTAGE D'AERATION

(30) Priorität: 13.09.2006 DE 102006043765; 27.03.2007 DE 102007014535
(43) Veröffentlichungstag der Anmeldung: 27.05.2009
(73) Patentinhaber: GEA WestfaliaSurge GmbH, 59199 Bönen (DE)
(72) Erfinder: WULLE, Manfred, 59227 Ahlen (DE); THEIS, Christelle, 58640 Iserlohn (DE)
(74) Vertreter: Neumann, Ditmar
(86) Internationale Anmeldenummer: PCT/EP2007/059519
(87) Internationale Veröffentlichungsnummer: WO 2008/031818

(56) Entgegenhaltungen:
- WO-A-01/33947
- WO-A-99/31968
- US-A- 6 055 931

## Beschreibung

Der Gegenstand der Erfindung bezieht sich auf eine Anordnung umfassend ein Zitzengummi und einen Milchschlauch, der einen bogenförmigen Abschnitt aufweist, auf einen Melkbecher sowie auf ein Strömungselement zur Verwendung mit einem Zitzengummi oder einem Milchschlauch.

Zum maschinellen Melken von Tieren, insbesondere von Kühen, Schafen und Ziegen, werden Melkbecher verwendet. Ein Melkbecher weist eine Hülse auf, in der ein Zitzengummi angeordnet ist. Der Zitzengummi ist das einzige Maschinenteil einer Melkanlage, das unmittelbar mit dem hochempfindlichen Organ Euter, welches von Tier zu Tier unterschiedlich sein kann, in Berührung kommt. Für die richtige Führung und Massage der Zitzenspitze ist ein optimaler Sitz an der Zitze und somit eigentlich eine tierindividuelle Ausgestaltung des Tierzitzengummis erforderlich.

Ein Zitzengummi unterteilt sich in den Kopf- und Schaftbereich. Um eine ausreichende Führung der Zitze gewährleisten zu können, darf die Öffnung im Kopfbereich nur so groß wie nötig, aber auf keinen Fall zu klein sein. Kurze Zitzen ragen in der Regel nicht weit genug in das Zitzengummi hinein. Sie verlangen einen speziellen geformten Zitzengummikopf. Durch die Ausgestaltung des Zitzengummis soll sichergestellt werden, dass die Zitze noch in den Bereich des Schaftes hineinragt und eine Massage noch möglich ist.

Es sind unterschiedliche Ausgestaltungen der Melkbecher bekannt. Bekannt sind beispielsweise Melkbecher, die ein zweiteiliges Zitzengummi aufweisen. Hier ist das Zitzengummi innerhalb der Hülse angeordnet. Mit dem Zitzengummi bzw. der Hülse ist ein kurzer Milchschlauch verbunden. Darüber hinaus ist bekannt, dass das Zitzengummi und der kurze Milchschlauch einstückig ausgebildet sein können. Solche Ausgestaltungen werden auch als Monoblock bezeichnet.

Die Zitzengummis können aus synthetischen Kautschuk, Silikonmaterial oder anderen Materialien bestehen, welche den Anforderungen an die Verträglichkeit mit dem Nahrungsmittel Milch genügen. Darüber hinaus bedarf es einer gewissen Elastizität des Zitzengummis, um sicherzustellen, dass der Melkvorgang ohne eine negative Beeinflussung des Tieres durchgeführt werden kann.

Durch die Druckschriften "Top Flow S - Das Melkzeug für Schafrassen" und "Top Flow Z - Das Melkzeug für alle Ziegenrassen" der Firma WestfaliaSurge ist bekannt, dass der Melkschlauch über einen Stutzen mit dem Zitzengummi verbunden werden kann, wobei der Stutzen im Wesentlichen senkrecht zur Längsachse des Zitzengummis angeordnet ist. Hierdurch wird eine kompakte Bauweise des Melkbechers erreicht.

Während eines Melkvorgangs wird die ermolkene Milch abtransportiert. Hierzu herrscht im Milchschlauch und im Zitzengummi ein Unterdruck. Um den Abtransport zu gewährleisten ist durch US-A-6,055,931 bekannt, den Strömungsweg der Milch über einen Kanal mit der Umgebungsatmosphäre zu verbinden. Die Belüftung des Strömungswegs hat den Vorteil, dass die ermolkene Milch rasch abtransportiert werden kann, was insbesondere bei höheren Milchflüssen von besonderer Bedeutung ist.

Durch die WO-A-01/33947 ist eine Anordnung umfassend ein Zitzengummi und einen Milchschlauch, der einen bogenförmigen Abschnitt aufweist, bekannt. Die Anordnung weist einen Strömungsweg zum Ableiten ermolkener Milch auf. Der Strömungsweg ist über einen Kanal mit Umgebungsatmosphäre verbunden, wobei der Kanal so ausgebildet ist, dass die Strömungsrichtung der durch den Kanal in den Strömungsweg der Milch umströmenden Luft im Wesentlichen der Strömungsrichtung der Milch entspricht. Der Kanal ist gebildet durch eine Hohlnadel, die in den Milchschlauch gestochen wird.

Hiervon ausgehend liegt der vorliegenden Erfindung die Aufgabe zugrunde, die gattungsgemäße Anordnung weiterzubilden.

Diese Aufgabe wird erfindungsgemäß durch eine Anordnung mit den Merkmalen des Anspruchs 1 bzw. durch Melkbecher mit den Merkmalen des Anspruchs 13 gelöst. Vorteilhafte Weiterbildungen und Ausgestaltungen der Anordnung bzw. des Melkbechers sind Gegenstand der jeweiligen abhängigen Ansprüche.

Die erfindungsgemäße Anordnung weist einen Strömungsweg zum Ableiten der ermolkenen Milch auf. Der Strömungsweg der Milch ist über einen Kanal mit Umgebungsatmosphäre verbunden. Der Kanal ist vorzugsweise düsenförmig ausgebildet, so dass vorgegebene Luftmengen in den Strömungsweg der Milch eingeleitet werden können. Der Kanal ist bei der erfindungsgemäßen Anordnung so ausgebildet, dass die Strömungsrichtung der durch den Kanal in den Strömungsweg einströmenden Luft im Wesentlichen der Strömungsrichtung der Milch entspricht.

Der Kanal ist in einem im Wesentlichen bogenförmig ausgebildeten Abschnitt eines Zitzengummis oder des Milchschlauchs ausgebildet. Besonders bevorzugt ist dabei eine Ausgestaltung, bei der der Kanal in einer Außenseite der Wand des bogenförmigen Abschnittes ausgebildet ist. Gegebenenfalls kann der Kanal in einer Innenseite der Wand des bogenförmigen Abschnittes ausgebildet sein. Insbesondere wird vorgeschlagen, dass der Kanal im Totfluidgebiet des bogenförmigen Abschnittes positioniert ist.

Durch diese erfindungsgemäße Ausgestaltung der Anordnung werden Strömungsverluste verringert. Darüber hinaus wird erreicht, dass der Strömungswiderstand geringer wird als bei herkömmlichen Anordnungen, da die Luft im Wesentlichen in Strömungsrichtung der Milch strömt.

Eine solche Ausbildung der Anordnung hat darüber hinaus den Vorteil, dass durch die einströmende Luft im Wesentlichen keine Zerstörung der sich in der Milch befindenden Fettkügelchenmembranen erfolgt. Durch mikrobiologische Umsetzung und durch Lipolyse der Rohmilch durch Milchenzyme kann es zur Spaltung von Milchfetten kommen. Hierbei entstehen freie Fettsäuren, was einen negativen Einfluss auf den Geschmack der Milch und gegebenenfalls der aus der Milch hergestellten Butter oder Butterfett hat. In frischer Rohmilch sind bereits primäre Lipasen enthalten. Diese Lipasen können zusammen mit sekundären mikrobiellen Lipasen das Milchfett schädigen und zur Ranzigkeit des Milchfettes führen. Dieser Effekt wird durch geschädigte Fettkügelchenmembranen verstärkt. Da eine solche Schädigung der Fettkügelchenmembranen durch die erfindungsgemäße Ausgestaltung der Anordnung weitgehend vermieden wird, wird auch eine höhere Qualität der Milch erzielt.

Besonders bevorzugt ist eine Ausgestaltung der Anordnung in der Gestalt, dass die Strömungsrichtung der durch den Kanal in den Strömungsweg einströmenden Luft im Wesentlichen parallel zur Strömungsrichtung der Milch ist. Hierdurch strömt die Luft nicht gegen die Milch, sondern mit dieser, was auch eine Verringerung der Strömungswiderstände zur Folge hat.

Der Kanal ist vorzugsweise so in dem Zitzengummi angeordnet, dass dieser unterhalb einer sich im Zitzengummi befindenden Zitze liegt. Bei Zitzengummis, welche als Monoblock ausgebildet sind, das heißt bei Zitzengummis, die einstückig mit einem Milchschlauch verbunden sind, ist es von Vorteil, wenn der Kanal im Milchschlauch ausgebildet ist.

Insbesondere bei Tieren mit tief liegenden Eutern bzw. Zitzen besteht das Problem, dass der Raum zwischen der Zitze und dem Boden zu gering sein kann. Es wird daher vorgeschlagen, dass der kurze Milchschlauch im Wesentlichen quer zur Längsrichtung des Zitzengummis ausgebildet bzw. positioniert ist, wie dies beispielsweise in dem Prospekt "Top Flow" der Firma WestfaliaSurge beschrieben ist.

Das Zitzengummi und/oder der Milchschlauch bestehen aus einem weichelastischen Werkstoff. Um sicherzustellen, dass der Kanal einen Querschnitt aufweist, der unabhängig von möglichen mechanischen Belastungen des Zitzengummis oder des Milchschlauchs ist, wird nach einer noch weiteren vorteilhaften Ausgestaltung des erfindungsgemäßen Zitzengummis vorgeschlagen, dass ein Zitzengummi oder ein Milchschlauch eine Durchgangsöffnung aufweist, durch welche sich wenigstens teilweise ein Strömungselement erstreckt, das eine Öffnung hat. Das Strömungselement besteht vorzugsweise aus einem Werkstoff, oder ist konstruktiv so ausgebildet, dass es eine höhere Festigkeit aufweist, so dass die Öffnung einen konstanten Querschnitt unabhängig von möglichen mechanischen Belastungen des Zitzengummis oder des Milchschlauchs hat.

Gemäß einer noch weiteren vorteilhaften Ausgestaltung der erfindungsgemäßen Anordnung wird vorgeschlagen, dass im Bereich der Durchgangsöffnung wenigstens eine Dichtung vorgesehen ist. Insbesondere wird vorgeschlagen, dass die Dichtung in Form einer Dichtlippe ausgebildet ist. Es besteht auch die Möglichkeit das Element mit einer Dichtlippe zusätzlich oder anstelle der Dichtlippe im Bereich der Durchgangsöffnung vorzusehen. Das Strömungselement ist vorzugsweise form- und/oder kraftschlüssig mit dem Zitzengummi oder dem Milchschlauch verbunden. Das Strömungselement und das Zitzengummi oder das Strömungselement und der Milchschlauch sind vorzugsweise nach dem Mehr-Komponenten-Spritzverfahren hergestellt. Insbesondere wird vorgeschlagen, dass die Herstellung nach dem Zwei-Komponenten-Spritzverfahren erfolgt. Durch diese Maßnahme wird eine vereinfachte Herstellung des Zitzengummis erreicht.

Eine besonders vorteilhafte Ausgestaltung der Anordnung mit einem Strömungselement ist eine solche, die einen Grundkörper aufweist. In dem Grundkörper ist eine Öffnung ausgebildet. Mit dem Grundkörper ist ein rohrförmiger Fortsatz verbunden, welcher im Wesentlichen koaxial zur Öffnung angeordnet ist. Am freien Ende des Fortsatzes ist ein Kragen vorgesehen. Der Abstand zwischen dem Grundkörper und dem Kragen ist vorzugsweise so gewählt, dass der Kragen in das Zitzegummi bzw. in den Milchschlauch hineinragt, wobei der Grundkörper an der Wand des Zitzengummis bzw. des Milchschlauchs anliegt.

Gemäß einer noch weiteren vorteilhaften Ausgestaltung der erfindungsgemäßen Anordnung wird vorgeschlagen, dass der Fortsatz wenigstens einen sich in axialer Richtung erstreckenden Schlitz aufweist. Besonders bevorzugt ist dabei eine Ausgestaltung des Fortsatzes, die wenigstens zwei Schlitze aufweist, durch welche der Fortsatz eine gewisse federelastische Eigenschaft hat. Die Ausbildung des Fortsatzes mit den Schlitzen hat den Vorteil, dass zum Einen die Einbringung des Elementes in das Zitzengummi bzw. in den Milchschlauch erleichtert wird. Andererseits hat die geschlitzte Ausführung des Fortsatzes den Vorteil, dass die Reinigung erleichtert wird, da Reinigungsflüssigkeiten, Spülflüssigkeiten oder andere Flüssigkeiten, die im Zusammenhang mit der Hygiene der Melkanlage zum Einsatz gelangen, auch den Bereich des Elementes erfassen.

Gemäß einer noch weiteren vorteilhaften Ausgestaltung der Erfindung wird vorgeschlagen, dass die Wand des Zitzengummis oder des Milchschlauches eine im Wesentlichen zum Grundkörper korrespondierend ausgebildete Ausnehmung aufweist. Dies kann auch dadurch erreicht werden, dass auf die Wand des Zitzegummis Material angehäuft wird. Der Vorteil einer solchen Ausgestaltung des erfindungsgemäßen Zitzengummis kann darin gesehen werden, dass eine im Wesentlichen ebene Fläche erreicht wird, so dass das Element nicht unbeabsichtigt aus dem Zitzengummi bzw. dem Milchschlauch herausgezogen werden kann.

Besonders bevorzugt ist eine Ausgestaltung, bei der der Grundkörper und die Ausnehmung asymmetrisch ausgebildet sind, so dass eine definierte Lage des Elementes im Zitzengummi bzw. im Milchschlauch erreicht wird, was insbesondere in Verbindung mit der geschlitzten Ausbildung der Fortsätze von Vorteil ist.

Nach einem noch weiteren erfinderischen Gedanken wird ein Melkbecher umfassend ein Zitzengummi vorgeschlagen, das einen Strömungsweg zum Ableiten der ermolkenen Milch aufweist, wobei der Strömungsweg der Milch über einen Kanal mit umgebungsatmosphäre verbunden ist. Der erfindungsgemäße Melkbecher zeichnet sich dadurch aus, dass der Kanal so ausgebildet ist, dass der Kanal in einer Wand eines bogenförmigen Abschnittes ausgebildet ist, wodurch die durch den Kanal in den Strömungsweg einströmende Luft im Wesentlichen der Strömungsrichtung der Milch entspricht. Besonders vorteilhaft ist eine Ausgestaltung des Melkbechers, bei der die Anordnung nach wenigstens einem der Ansprüche 2 bis 12 ausgebildet ist.

Nach einem noch weiteren erfinderischen Gedanken wird ein Strömungselement zur Verwendung mit einem Zitzengummi oder einem Milchschlauch vorgeschlagen wobei das Strömungselement einen Grundkörper umfasst in dem ein Kanal ausgebildet und mit dem Grundkörper ein im Wesentlichen rohrförmiger Fortsatz verbunden ist, welcher im Wesentlichen koaxial zum Kanal angeordnet ist. Hierdurch wird die Möglichkeit geschaffen eine Belüftung mittels des Strömungselementes durchzuführen. Der Kanal kann unterschiedliche Querschnittsgrößen haben. Vorzugsweise ist dieser im Wesentlichen düsenförmig ausgebildet. Der Fortsatz weist wenigstens einen sich in axialer Richtung erstreckenden Schlitz auf.

Gemäß einer vorteilhaften Ausgestaltung des Strömungselementes wird vorgeschlagen, dass der Fortsatz an seinem freien Ende einen Kragen aufweist. Der Fortsatz ist vorzugsweise aus einem Material hergestellt, welches eine gewisse federelastische Eigenschaft aufweist, so dass bei der Montage des Strömungselementes der Fortsatz zusammengedrückt werden kann. Zur Vereinfachung der Montage wird gemäß einer noch weiteren vorteilhaften Ausgestaltung des Strömungselementes vorgeschlagen, dass der Kragen eine Einführschräge aufweist.

Durch die erfindungsgemäße Ausgestaltung des Zitzengummis wird eine Verringerung des Innendurchmessers des Zitzengummis bzw. des Milchschlauchs vermieden.

Die Erfindung hat weitere zahlreiche Vorteile. Weitere Vorteile und Einzelheiten werden anhand des in der Zeichnung dargestellten Ausführungsbeispiels erläutert, ohne dass der Gegenstand der Erfindung auf dieses konkrete Ausführungsbeispiel beschränkt wird.

Es zeigen:
- Fig. 1:: schematisch ein Ausführungsbeispiel eines erfindungsgemäßen Zitzengummis in einer perspektivischen Ansicht,
- Fig. 2:: ein Element mit Kanal in einer Draufsicht,
- Fig. 3:: das Element in einer perspektivischen Ansicht von vorne,
- Fig. 4:: das Element in einer perspektivischen Ansicht von unten und
- Fig. 5:: vergrößert ein Abschnitt des Zitzengummis nach Fig. 1 in einer perspektivischen Ansicht.

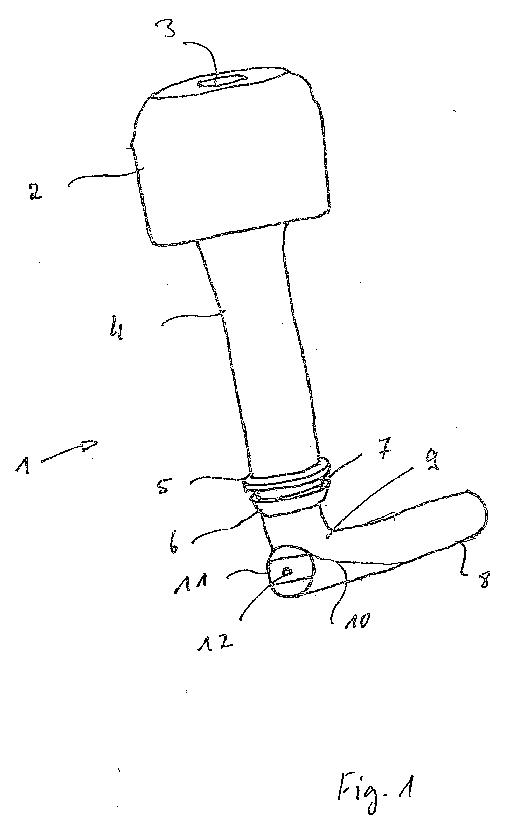

In der Fig. 1 ist schematisch in einer perspektivischen Ansicht eine erfindungsgemäße Anordnung mit einem Zitzengummi 1 dargestellt. Das Zitzengummi 1 weist einen Kopf 2 auf. Zum Einführen einer Zitze in das Zitzengummi 1 weist der Kopf 2 eine Zitzenöffnung 3 auf. An den Kopf 2 schließt sich ein Schaft 4 an. Beabstandet zum Kopf 2 weist das Zitzengummi eine erste Wulst 5 und eine zweite Wulst 6 auf. Die Wülste 5, 6 begrenzen eine Nut 7. Nicht dargestellt sind die Hülse sowie die weiteren Bestandteile eines Melkbechers. Die Hülse, in die das Zitzengummi 1 eingebracht wird, weist eine Öffnung auf, deren Rand in die Nut 7 eingreift. Ein oberer Rand der Hülse wird von dem Kopf 2 umfasst.

Mit dem Bezugszeichen 8 ist ein Milchschlauch bezeichnet. Der Milchschlauch 8 ist mit dem Zitzengummi 1 über einen bogenförmigen Abschnitt 9 verbunden. Das Zitzengummi 1 und der Milchschlauch 2 sind einstückig ausgebildet. Sie bilden einen sogenannten Monoblock.

In dem dargestellten Ausführungsbeispiel ist der bogenförmige Abschnitt 9 so ausgebildet, dass sich die Längsachsen des Zitzengummis und des Milchschlauchs 8 unter einem Winkel von ca. 90° schneiden. Dies ist nicht zwingend notwendig. Es besteht auch die Möglichkeit, dass sich die Achsen unter einem anderen Winkel schneiden.

An der Außenseite der Wand 10 des bogenförmigen Abschnittes 9 ist ein Strömungselement 11 vorgesehen, welches vorzugsweise form- und/oder kraftschlüssig mit dem bogenförmigen Abschnitt 9 verbunden ist. Das Strömungselement 11 weist einen Kanal 12 auf. Der Kanal 12 verbindet das Zitzengummi mit der Umgebungsatmosphäre. Der Kanal 12 ist so ausgerichtet, dass die Strömungsrichtung der durch den Kanal 12 in den Strömungsweg der Milch einströmenden Luft im Wesentlichen der Strömungsrichtung der Milch entspricht. In dem dargestellten Ausführungsbeispiel strömt Luft durch den Kanal 12 im Wesentlichen parallel zur Strömungsrichtung der Milch. Der Kanal 12 kann düsenförmig ausgebildet sein.

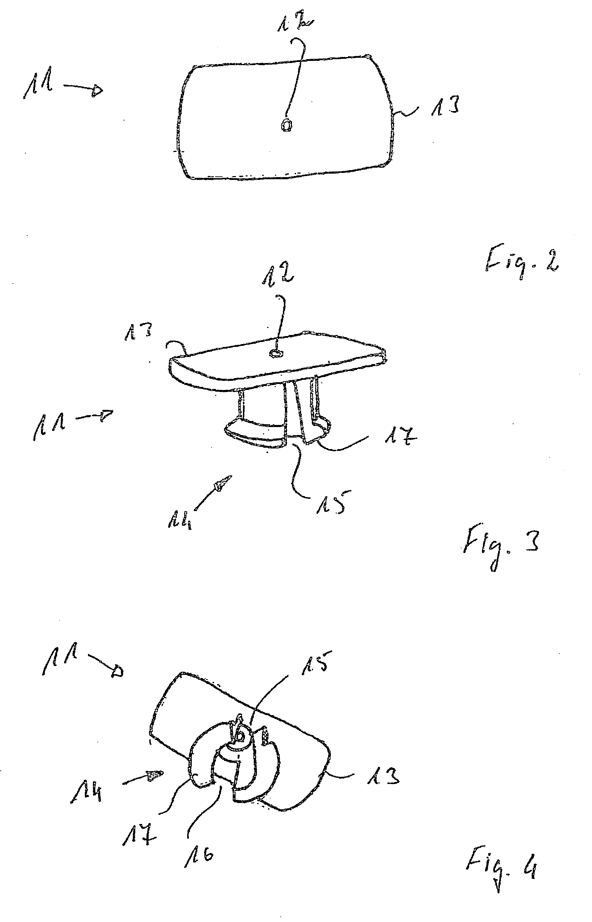

Einzelheiten des Strömungselementes 11 sind anhand der bevorzugten Ausbildung, wie sie in den Figuren 2 bis 4 dargestellt ist, ersichtlich.

Im Bereich der Durchgangsöffnung 19 ist eine Dichtung 20 vorgesehen. Durch die Dichtung 20 wird eine vorzugsweise flüssigkeitsdichte Verbindung zwischen dem Strömungselement 11 und dem Milchschlauch 8 erreicht. Die Dichtung ist in Form einer Dichtlippe ausgebildet, die sich in Umfangsrichtung der Durchgangsöffnung erstreckt. Die Dichtlippe kann mit dem Milchschlauch in einem Herstellungsschritt ausgebildet sein. Es besteht auch die Möglichkeit ein separates Dichtelement vorzusehen.

Das Strömungselement 11 weist einen Grundkörper 13 auf. Der Grundkörper 13 ist vorzugsweise plattenförmig ausgebildet. Insbesondere wird vorgeschlagen, dass der Grundkörper asymmetrisch ist. An einer Fläche des Grundkörpers 13 und von dieser im Wesentlichen senkrecht vorstehend ist ein Fortsatz 14 weist an seinem freien Ende einen Kragen 17 auf. In dem dargestellten Ausführungsbeispiel weist der Kragen 17 eine im Wesentlichen dreieckförmige Querschnittsgestalt auf, wodurch eine Montage bzw. Demontage des Elementes erleichtert wird, da die Flächen des Kragens 17 Schrägen, insbesondere Einführschrägen, bilden.

Der Fortsatz 14 weist in dem dargestellten Ausführungsbeispiel zwei Schlitze 15, 16 auf, die sich über die gesamte Länge des Fortsatzes 14 erstrecken. Die Schlitze 15, 16 sind gegenüberliegend ausgebildet. Durch diese Ausbildung der Schlitze wird eine vereinfachte Reinigung des Strömungselementes 11 erreicht. Darüber hinaus verleihen die Schlitze dem Element 11 bzw. dem Fortsatz 14 eine gewisse Elastizität, so dass eine Montage bzw. Demontage des Strömungselementes vereinfacht wird. Der Fortsatz 14 kann auch mehr als zwei Schlitze aufweisen.

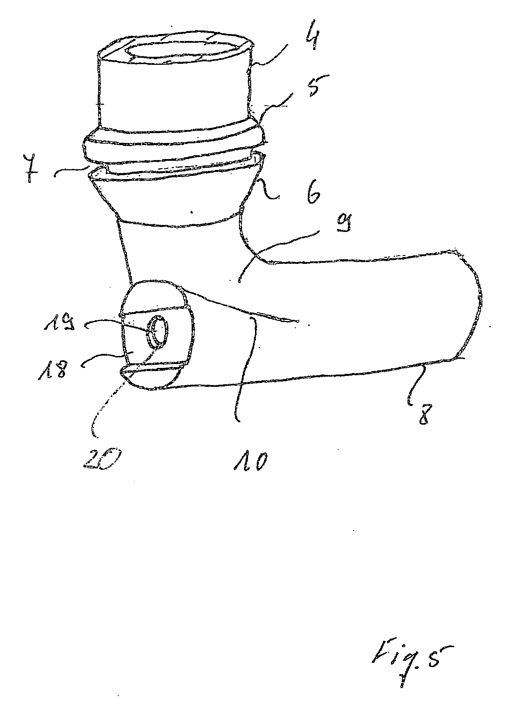

Fig. 5 zeigt vergrößert einen Abschnitt des Zitzengummis 1 nach Fig. 1. Nicht dargestellt ist in der Fig. 5 das Element 11. Der bogenförmige Abschnitt 9 weist an seiner Außenseite der Wand 10 eine Ausnehmung 18 auf, in die der Grundkörper 13 des Elementes 11 einbringbar ist. Der Fortsatz 14 des Strömungslementes 11 erstreckt sich durch eine Durchgangsöffnung 19 hindurch. Der Abstand zwischen dem Kragen 17 und dem Grundkörper 13 ist vorzugsweise so gewählt, dass eine form- und/oder kraftschlüssige Verbindung mit dem Rand der Durchgangsöffnung 19 entsteht, wenn sich der Fortsatz 14 durch die Durchgangsöffnung 19 hindurch erstreckt. Eine Abdichtung zwischen dem Strömungselement 11 und der Durchgangsöffnung 19 wird durch das Dichtelement 20, welches vorzugsweise in Form einer Dichtlippe ausgebildet ist, erzielt.

### Bezugszeichenliste

- 1: Zitzengummi
- 2: Kopf
- 3: Zitzenöffnung
- 4: Schaft
- 5: erste Wulst
- 6: zweite Wulst
- 7: Nut
- 8: Milchschlauch,
- 9: bogenförmiger Abschnitt
- 10: Wand
- 11: Strömungselement
- 12: Kanal
- 13: Grundkörper
- 14: Fortsatz
- 15: Schlitz
- 16: Schlitz 17 Kragen
- 18: Ausnehmung
- 19: Durchgangsöffnung
- 20: Dichtung

## Patentansprüche

1. Anordnung umfassend ein Zitzengummi (1) und einen Milchschlauch (8), der einen bogenförmigen Abschnitt (9) aufweist, wobei die Anordnung einen Strömungsweg zum Ableiten ermolkener Milch aufweist, der über einen Kanal (12) mit Umgebungsatmosphäre verbunden ist, wobei der Kanal (12) so ausgebildet ist, dass die Strömungsrichtung der durch den Kanal (12) in den Strömungsweg der Milch einströmenden Luft im wesentlichen der Strömungsrichtung der Milch entspricht, **dadurch gekennzeichnet, dass** der Kanal (12) in einer Wand (10) des bogenförmigen Abschnittes (9) ausgebildet ist.

2. Anordnung nach Anspruch 1, **dadurch gekennzeichnet, dass** der Kanal (12) so angeordnet ist, dass die Strömungsrichtung der durch den Kanal (12) in den Strömungsweg der Milch einströmenden Luft im Wesentlichen parallel zur Strömungsrichtung der Milch ist.

3. Anordnung nach Anspruch 1 oder 2, **dadurch gekennzeichnet, dass** ein Strömungselement (11) mit einem Kanal (12) vorgesehen ist, welches sich wenigstens teilweise durch eine Durchgangsöffnung (19) im bogenförnigen Abschnitt (9) erstreckt.

4. Anordnung nach Anspruch 3, **dadurch gekennzeichnet, dass** im Bereich der Durchgangsöffnung (19) wenigstens eine Dichtung (20), vorzugsweise eine Dichtungslippe vorgesehen ist.

5. Anordnung nach Anspruch 3 oder 4" **dadurch gekennzeichnet, dass** das Strömungselement (11) form- und/oder kraftschlüssig mit dem bogenförmigen Abschnitt (9) verbunden ist.

6. Anordnung nach Anspruch 3, 4 oder 5, **dadurch gekennzeichnet, dass** das Strömungselement (11) und das Zitzengummi (1) oder der Milchschlauch (8) nach dem Mehr-Komponenten-Spritzverfahren, insbesondere nach dem Zwei-Komponenten-Spritzverfahren hergestellt sind.

7. Anordnung nach wenigstens einem der vorhergehenden Ansprüche 1 bis 6, **dadurch gekennzeichnet, dass** das Zitzengummi (1) und der Milchschlauch (8) einstückig ausgebildet sind.

8. Anordnung nach einem der Ansprüche 3 bis 7, **dadurch gekennzeichnet, dass** das Strömungselement (11) einen Grundkörper (13) in dem der Kanal (12) ausgebildet ist, aufweist, wobei mit dem Grundkörper (13) ein rohrförmiger Fortsatz (14) verbunden ist, welcher im Wesentlichen koaxial zum Kanal (12) angeordnet ist und an seinem freien Ende einen Kragen (17) aufweist.

9. Anordnung nach Anspruch 8, **dadurch gekennzeichnet, dass** der Fortsatz (14) wenigstens einen sich in axialer Richtung erstreckenden Schlitz (15) aufweist.

10. Anordnung nach Anspruch 8 oder 9, **dadurch gekennzeichnet, dass** der Kragen (17) eine Einführschräge aufweist.

11. Anordnung nach Anspruch 8, 9 oder 10, **dadurch gekennzeichnet, dass** die Wand (10) des Zitzengummis (1) oder des Milchschlauchs (8) eine im Wesentlichen zum Grundkörper (13) korrespondierend ausgebildete Ausnehmung (18) aufweist.

12. Anordnung nach Anspruch 11, **dadurch gekennzeichnet, dass** der Grundkörper (13) und die Ausnehmung (18) asymmetrisch ausgebildet sind.

13. Melkbecher mit einer Mellcbecherhülse und einer Anordnung umfassend ein Zitzengummi (1) und einen Milchschlauch (8), der einen bogenföuznigen Abschnitt (9) aufweist, wobei die Anordnung einen Strömungsweg zum Ableiten ermolkener Milch aufweist, der über einen Kanal (12) mit Umgebungsatmosphäre verbunden ist, wobei der der Kanal (12) so ausgebildet ist, dass die Strömungsrichtung der durch den Kanal (12) in den Strömungsweg der Milch einströmenden Luft im Wesentlichen der Strömungsrichtung der Milch entspricht, **dadurch gekennzeichnet, dass** der Kanal (12) in einer Wand (10) des bogenförmigen Abschnittes (9) ausgebildet ist.

14. Melkbecher nach Anspruch 13, wobei die Anordnung nach wenigstens einem der vorhergehenden Ansprüche 2 bis 12 ausgebildet ist.

15. Strömungselement zur Verwendung mit einem Zitzengummi oder einem Milchschlauch, wobei das Strömungselement (11) einen Grundkörper (13) aufweist, in dem ein Kanal (12) ausgebildet und mit dem Grundkörper (13) ein rohrförmiger Fortsatz (14) verbunden ist, welcher im Wesentlichen koaxial zum Kanal (12) angeordnet ist, wobei der Fortsatz (14) wenigstens einen sich in axialer Richtung erstreckenden Schlitz (15) aufweist.

16. Strömungselement nach Anspruch 15, **dadurch gekennzeichnet, dass** der Fortsatz an seinem freien Ende einen Kragen (17) aufweist.

17. Strömungselement nach Anspruch 16, **dadurch gekennzeichnet, dass** der Kragen (17) eine Einführschräge aufweist.

## Claims

1. Arrangement comprising a teat rubber (1) and a milk hose (8) which has a curved section (9), wherein the arrangement has a flow path for conducting away milk which has been milked, the flow path being connected to the surrounding atmosphere via a channel (12), wherein the channel (12) is designed in such a manner that the flow direction of the air flowing into the flow path of the milk through the channel (12) substantially corresponds to the flow direction of the milk, **characterized in that** the channel (12) is formed in a wall (10) of the curved section (9).

2. Arrangement according to Claim 1, **characterized in that** the channel (12) is arranged in such a manner that the flow direction of the air flowing into the flow path of the milk through the channel (12) is substantially parallel to the flow direction of the milk.

3. Arrangement according to Claim 1 or 2, **characterized in that** a flow element (11) is provided with a channel (12) which at least partially extends through a passage opening (19) in the curved section (9).

4. Arrangement according to Claim 3, **characterized in that** at least one seal (20), preferably a sealing lip, is provided in the region of the passage opening (19).

5. Arrangement according to Claim 3 or 4, **characterized in that** the flow element (11) is connected to the curved section (9) in a form-fitting and/or frictional manner.

6. Arrangement according to Claim 3, 4 or 5, **characterized in that** the flow element (11) and the teat rubber (1) or the milk hose (8) are produced by multi-component injection moulding, in particular by two-component injection moulding.

7. Arrangement according to at least one of the preceding Claims 1 to 6, **characterized in that** the teat rubber (1) and the milk hose (8) are formed as a single piece.

8. Arrangement according to one of Claims 3 to 7, **characterized in that** the flow element (11) has a basic body (13) in which the channel (12) is formed, a tubular extension (14) which is arranged substantially coaxially to the channel (12) and has a collar (17) at its free end being connected to the basic body (13).

9. Arrangement according to Claim 8, **characterized in that** the extension (14) has at least one slot (15) extending in the axial direction.

10. Arrangement according to Claim 8 or 9, **characterized in that** the collar (17) has an insertion slope.

11. Arrangement according to Claim 8, 9 or 10, **characterized in that** the wall (10) of the teat rubber (1) or of the milk hose (8) has a recess (18) of substantially corresponding design to the basic body (13).

12. Arrangement according to Claim 11, **characterized in that** the basic body (13) and the recess (18) are of asymmetrical design.

13. Milking cup with a milking cup sleeve and an arrangement comprising a teat rubber (1) and a milk hose (8) which has a curved section (9), wherein the arrangement has a flow path for conducting away milk which has been milked, the flow path being connected to the surrounding atmosphere via a channel (12), wherein the channel (12) is designed in such a manner that the flow direction of the air flowing into the flow path of the milk through the channel (12) substantially corresponds to the flow direction of the milk, **characterized in that** the channel (12) is formed in a wall (10) of the curved section (9).

14. Milking cup according to Claim 13, wherein the arrangement is designed according to at least one of the preceding Claims 2 to 12.

15. Flow element for use with a teat rubber or a milk hose, wherein the flow element (11) has a basic body (13) in which a channel (12) is formed, and a tubular extension (14) which is arranged substantially coaxially to the channel (12) is connected to the basic body (13), the extension (14) having at least one slot (15) extending in the axial direction.

16. Flow element according to Claim 15, **characterized in that** the extension has a collar (17) at its free end.

17. Flow element according to Claim 16, **characterized in that** the collar (17) has an insertion slope.

## Revendications

1. Agencement comprenant une tétine en caoutchouc (1) et un tuyau à lait (8) qui présente une portion (9) de forme courbe, l'agencement présentant une voie d'écoulement pour évacuer le lait trait, laquelle voie d'écoulement est reliée par un canal (12) à l'atmosphère environnante, le canal (12) étant réalisé de telle sorte que le sens d'écoulement de l'air affluant à travers le canal (12) dans la voie d'écoulement du lait corresponde approximativement au sens d'écoulement du lait, **caractérisé en ce que** le canal (12) est réalisé dans une paroi (10) de la portion (9) de forme courbe.

2. Agencement selon la revendication 1, **caractérisé en ce que** le canal (12) est disposé de telle sorte que le sens d'écoulement de l'air affluant à travers le canal (12) dans la voie d'écoulement du lait est sensiblement parallèle au sens d'écoulement du lait.

3. Agencement selon la revendication 1 ou 2, **caractérisé en ce qu'**un élément d'écoulement (11) est pourvu d'un canal (12) qui s'étend au moins en partie à travers une ouverture de passage (19) dans la portion (9) de forme courbe.

4. Agencement selon la revendication 3, **caractérisé en ce qu'**au moins un joint d'étanchéité (20), de préférence une lèvre d'étanchéité, est prévu dans la région de l'ouverture de passage (19).

5. Agencement selon la revendication 3 ou 4, **caractérisé en ce que** l'élément d'écoulement (11) est connecté par engagement par coopération de forme et/ou par force à la portion (9) de forme courbe.

6. Agencement selon la revendication 3, 4 ou 5, **caractérisé en ce que** l'élément d'écoulement (11) et la tétine en caoutchouc (1) ou le tuyau à lait (8) sont fabriqués par un procédé de pulvérisation à plusieurs composants, en particulier par un procédé de pulvérisation à deux composants.

7. Agencement selon au moins l'une quelconque des revendications précédentes 1 à 6, **caractérisé en ce que** la tétine en caoutchouc (1) et le tuyau à lait (8) sont réalisés d'une seule pièce.

8. Agencement selon l'une quelconque des revendications 3 à 7, **caractérisé en ce que** l'élément d'écoulement (11) présente un corps de base (13) dans lequel est réalisé le canal (12), une saillie (14) de forme tubulaire étant connectée au corps de base (13), laquelle est disposée essentiellement coaxialement au canal (12), et présente à son extrémité libre un rebord (17).

9. Agencement selon la revendication 8, **caractérisé en ce que** la saillie (14) présente au moins une fente (15) s'étendant dans la direction axiale.

10. Agencement selon la revendication 8 ou 9, **caractérisé en ce que** le rebord (17) présente un biseau d'insertion.

11. Agencement selon la revendication 8, 9 ou 10, **caractérisé en ce que** la paroi (10) de la tétine en caoutchouc (1) ou du tuyau à lait (8) présente un évidement (18) réalisé de manière correspondant essentiellement au corps de base (13).

12. Agencement selon la revendication 11, **caractérisé en ce que** le corps de base (13) et l'évidement (18) sont réalisés de manière asymétrique.

13. Récipient à lait comprenant une tubulure de récipient à lait et un agencement comprenant une tétine en caoutchouc (1) et un tuyau à lait (8) qui présente une portion (9) de forme courbe, l'agencement présentant une voie d'écoulement pour évacuer le lait trait, laquelle est connectée par le biais d'un canal (12) à l'atmosphère environnante, le canal (12) étant réalisé de telle sorte que le sens d'écoulement de l'air affluant à travers le canal (12) dans la voie d'écoulement du lait corresponde essentiellement au sens d'écoulement du lait, **caractérisé en ce que** le canal (12) est réalisé dans une paroi (10) de la portion (9) de forme courbe.

14. Récipient à lait selon la revendication 13, dans lequel l'agencement est réalisé selon au moins l'une quelconque des revendications précédentes 2 à 12.

15. Elément d'écoulement destiné à l'utilisation avec une tétine en caoutchouc ou un tuyau à lait, l'élément d'écoulement (11) présentant un corps de base (13) dans lequel est réalisé un canal (12), une saillie de forme tubulaire (14) étant connectée au corps de base (13), laquelle est disposée essentiellement de manière coaxiale au canal (12), la saillie (14) présentant au moins une fente (15) s'étendant dans la direction axiale.

16. Elément d'écoulement selon la revendication 15, **caractérisé en ce que** la saillie présente à son extrémité libre un rebord (17).

17. Elément d'écoulement selon la revendication 16, **caractérisé en ce que** le rebord (17) présente un biseau d'insertion.
